# DEMANDE DE BREVET EUROPEEN

(11) **EP 4 749 915 A1**
(43) Date de publication de la demande: **27.05.2026**
(21) Numéro de dépôt: 25217808.2
(22) Date de dépôt: 21.11.2025
(51) Int. Cl.: H02S 20/10, E04H 6/02, H02S 20/30, H02S 30/20

(54) **OMBRIÈRE PHOTOVOLTAÏQUE INDIVIDUELLE**

(30) Priorité: 21.11.2024 FR 2412776
(71) Demandeur: 2IBERT, 78140 Velizy-Villacoublay (FR)
(72) Inventeur: BERTONE, Yves, 78150 LE CHESNAY (FR)
(74) Mandataire: Oak & Fox

(57) **Abrégé**

Ombrière photovoltaïque (100) destinée à ombrager une zone de stationnement individuel d'un véhicule comportant un châssis, deux roues avant et deux roues arrière, ladite ombrière (100) comportant :
• un ensemble photovoltaïque comportant une pluralité de panneaux solaires photovoltaïques, et comportant un support de panneaux (112) supportant ladite pluralité de panneaux solaires photovoltaïques ;
• une structure de support (120) comportant au moins un montant (121) relié à l'ensemble photovoltaïque en une première extrémité longitudinale dudit ou de chacun desdits montants (121) par l'intermédiaire d'au moins une liaison,
• une embase (130) fixée à la structure de support (120) par l'intermédiaire d'au moins une fixation, ladite embase (130) formant une zone de roulage dudit véhicule et formant un leste de ladite ombrière photovoltaïque (100).

## Description

### Domaine de l'invention

L'invention concerne le domaine des ombrières destinées à ombrager une zone de stationnement individuel d'un véhicule.

Plus particulièrement, l'invention concerne le domaine des ombrières équipées de panneaux photovoltaïques.

### État de la technique

On connaît les ombrières photovoltaïques ancrées au sol du type de celles décrites dans les documents DE202012101518U1 (ELEKTRO PETRING GMBH), DE202016105226U1 (PREMIUM MOUNTING TECH GMBH & CO KG), DE202022101013U1 (VA Q TEC AG). Ces ombrières photovoltaïques comportent, généralement, un ensemble photovoltaïque monté sur une structure de support comportant au moins un montant, ladite structure de support étant ancrée dans le sol. L'ancrage de ces structures dans le sol nécessite des travaux importants qui rendent complexe l'installation de ces ombrières photovoltaïques. En outre, dans ces modes de réalisation, les montants sont agencés de telle manière qu'il existe un risque que le véhicule les percute lorsqu'il effectue une manœuvre de stationnement. Or, une telle percussion risque d'affaiblir dangereusement les caractéristiques structurelles de la structure de support. Cette dernière pourrait alors s'effondrer sous le poids de l'ensemble photovoltaïque.

L'ombrière photovoltaïque décrite dans le document EP2559829A2 (KOSTAL LEOPOLD GMBH & CO KG) permet de pallier l'inconvénient relatif à la complexité d'installation en fournissant une ombrière comprenant une embase en béton posée sur le sol. Ainsi posée sur le sol, l'ombrière photovoltaïque peut être installée sans nécessiter de travaux. Toutefois, cette solution présente certains inconvénients. En effet, l'embase réalisée en béton a une forme de muret en L qui, d'une part, gêne la manœuvre de stationnement du véhicule et risque d'interférer avec la carrosserie dudit véhicule et, dès lors, causer des dommages, et d'autre part, gêne l'ouverture de la porte avant droite du véhicule.

Face à cet état de fait, l'invention a pour objectif de fournir une ombrière photovoltaïque facile d'installation permettant de limiter les risques de dommages de la structure de support et du véhicule lors des manœuvres de stationnement dudit véhicule.

### Résumé de l'invention

Selon un aspect, l'invention se rapporte à une ombrière photovoltaïque destinée à ombrager une zone de stationnement individuel d'un véhicule comportant un châssis, deux roues avant et deux roues arrière, ladite ombrière comportant :
- un ensemble photovoltaïque comportant une pluralité de panneaux solaires photovoltaïques, et comportant un support de panneaux supportant ladite pluralité de panneaux solaires photovoltaïques ;
- une structure de support comportant au moins un montant relié à l'ensemble photovoltaïque en une première extrémité longitudinale dudit ou de chacun desdits montants par l'intermédiaire d'au moins une liaison,
- une embase fixée à la structure de support par l'intermédiaire d'au moins une fixation, ladite embase formant une zone de roulage dudit véhicule et formant un leste de ladite ombrière photovoltaïque.

Selon un mode de réalisation, la structure de support comporte deux montants agencés de part et d'autre des deux côtés latéraux de l'embase délimitant la largeur de la zone de stationnement, lesdits montants étant positionnés et fixés entre le milieu de chaque côté de l'embase et l'extrémité distale avant de chaque côté de l'embase.

Selon un mode de réalisation, le support de panneaux comporte un cadre comportant deux longerons et deux traverses sensiblement perpendiculaires entre eux, le longeron distal formant l'extrémité longitudinal de l'ombrière, la distance entre le longeron distal et la position du poteau dans le plan du cadre étant comprise entre 0,1 m et 1,8 m.

Selon un mode de réalisation, le longeron distal du support de panneaux comporte une fixation d'un élément de maintien à l'embase, ledit élément de maintien étant un couple de chaines, un couple de câbles, un couple de tubes ou un couple de poteaux, chaque élément de maintien étant fixé d'une part à l'embase et d'autre part au support de panneaux.

Selon un mode de réalisation, le support de panneaux comprend une pluralité de pannes destinée à relier les traverses entre elles et fixer les panneaux photovoltaïques. UN avantage est de réaliser les deux fonctions à partir d'uniques pièces : les pannes.

Selon un mode de réalisation, les traverses comprennent au moins chacune deux anneaux de levage.

Selon un mode de réalisation, l'embase comprend au moins deux butées latérales permettant de protéger les montants et de former un leste supplémentaire de l'ombrière.

Selon un mode de réalisation, l'embase comprend au moins un guide central apte à s'insérer entre les deux roues avant, ou les deux roues arrière, sous le châssis du véhicule lorsque ledit véhicule avance dans la zone de stationnement individuel.

Selon un mode de réalisation, l'embase est traversante.

Selon un autre aspect l'invention concerne un kit d'ombrière photovoltaïque, ladite ombrière photovoltaïque étant destinée à ombrager une zone de stationnement individuel d'un véhicule comportant un châssis, deux roues avant et deux roues arrière, ledit kit comprenant :
- une embase formant au moins un lest,
- une structure de support apte à être fixée sur l'embase, ladite structure de support comportant au moins un montant ;
- un ensemble photovoltaïque apte à être relié à une première extrémité longitudinale dudit ou de chacun desdits montants de la structure de support par l'intermédiaire d'au moins une liaison, ledit ensemble photovoltaïque comportant une pluralité de panneaux solaires photovoltaïques, et comportant un support de panneaux supportant ladite pluralité de panneaux solaires photovoltaïques ;
- au moins un élément de fixation de la structure de support sur l'embase,
- au moins un élément d'assemblage de la liaison entre l'ensemble photovoltaïque et la première extrémité longitudinale dudit ou de chacun desdits montants.

Selon un second aspect, la solution proposée par l'invention est une ombrière photovoltaïque destinée à ombrager une zone de stationnement individuel d'un véhicule comportant un châssis, deux roues avant et deux roues arrière, ladite ombrière comportant :
- un ensemble photovoltaïque comportant une pluralité de panneaux solaires photovoltaïques, et comportant un support de panneaux supportant ladite pluralité de panneaux solaires photovoltaïques ;
- une structure de support comportant au moins un montant relié à l'ensemble photovoltaïque en une première extrémité longitudinale dudit ou de chacun desdits montants par l'intermédiaire d'au moins une liaison ;
- une embase fixée à la structure de support par l'intermédiaire d'au moins une fixation, ladite embase comprenant au moins une butée apte à bloquer l'avance d'au moins une des deux dites roues avant, ou le recul d'au moins une des deux dites roues arrière, dudit véhicule lorsque ce dernier est en position dans ladite zone de stationnement individuel.

Ainsi, l'ombrière photovoltaïque de l'invention est facilement installable, ladite ombrière photovoltaïque étant posée sur le sol sans qu'il soit nécessaire de réaliser de travaux d'ancrage. En outre, la au moins une butée permet d'arrêter le véhicule afin que ce dernier reste à distance du au moins un montant. De la sorte, les risques de dommage à la structure portante sont évités. En outre, le contact de la au moins une butée avec la roue du véhicule est sans dommage pour ledit véhicule et notamment la carrosserie dudit véhicule.

Selon ce second aspect, mis à part les caractéristiques relatives au pliage de l'ombrière, l'ensemble des caractéristiques de ce second aspect sont également compatibles du premier aspect de l'invention.

Selon un mode de réalisation, l'embase comporte au moins un canal adapté pour recevoir un bras de levage d'un engin de levage.

Un avantage est de permettre de facilement déplacer l'ombrière photovoltaïque par un moyen de levage conventionnel de type chariot élévateur. Le chargement et le déchargement de l'ombrière photovoltaïque sur le plateau d'un camion sont ainsi grandement facilités, de même que son installation sur site.

Selon un mode de réalisation, l'embase comporte un élément central de guidage apte à s'insérer entre les deux roues avant, ou les deux roues arrière, sous le châssis du véhicule lorsque ledit véhicule avance dans la zone de stationnement individuel.

Un avantage est de permettre un guidage à la fois visuel et mécanique afin de faciliter l'insertion du véhicule sur la zone de stationnement individuel pendant la manœuvre de stationnement. En outre, l'élément de centrage augmente, d'une part, le poids de l'embase et, d'autre part, l'emprise au sol de l'embase garantissant ainsi une grande stabilité de l'ombrière photovoltaïque posée sur le sol. Également, l'élément central s'insère sous le véhicule éliminant ainsi les risques d'interactions entre cet élément central et la carrosserie dudit véhicule.

Selon un mode de réalisation, le support de panneaux comporte au moins une première articulation permettant le pliage d'une première partie dudit support de panneaux par rapport à une deuxième partie dudit support de panneaux.

Le pliage du support de panneaux permet de réduire l'encombrement de l'ombrière photovoltaïque et ainsi faciliter son transport et son installation. En outre, le pliage du support de panneaux permet de réduire le déport dudit support de panneaux et ainsi d'augmenter la stabilité de l'ombrière photovoltaïque pendant sa manutention et, en particulier, son déplacement par un appareil de levage de type chariot élévateur.

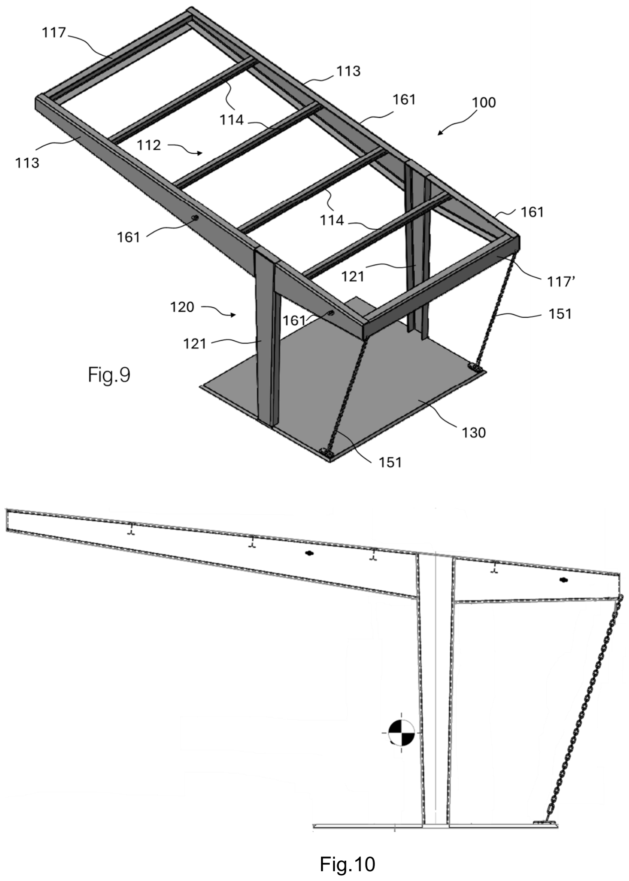

Dans le cas de l'ombrière des figure 9 et suivantes, le transport de l'ombrière est réalisé à partir des anneaux de levage 161. On trouve deux paires d'anneaux de levages le long des traverses. Une première paire est agencée sur une première traverse, la seconde faire sur la traverse opposée. De préférence, les anneaux de levages sont positionnés symétriquement de part et d'autre de l'ombrière pour équilibrer le poids de la structure lorsqu'elle est transportée.

Dans ce dernier cas, l'ombrière 100 est déplacée tout d'une pièce à partir d'un engin de chantier par exemple comportant un bras et des chaines pour permettre de relier les anneaux de levage 161 audit bras du véhicule de chantier.

Selon un mode de réalisation, le support de panneaux comporte au moins une deuxième articulation permettant le pliage de la deuxième partie dudit support de panneaux par rapport à une troisième partie dudit support de panneaux.

Le pliage en trois parties du support permet encore d'améliorer la transportabilité et la manutention de l'ombrière photovoltaïque.

Selon un mode de réalisation, le support de panneaux comporte un ou plusieurs panneau(x) solaire(s) photovoltaïque(s) monté(s) sur la première partie, un ou plusieurs panneau(x) solaire(s) photovoltaïque(s) monté(s) sur la deuxième partie et un ou plusieurs panneau(x) solaire(s) photovoltaïque(s) monté(s) sur la troisième partie.

Un avantage est de permettre le pliage du support de panneaux sans démontage des panneaux solaires photovoltaïques du support de panneaux.

Selon un mode de réalisation, le support de panneaux comporte au moins deux traverses reliées entre elles par une pluralité de pannes.

Un avantage est de permettre l'assemblage d'une structure, à la fois, suffisamment rigide pour permettre de supporter les panneaux photovoltaïques et, à la fois, suffisamment légère pour permettre, d'une part, le maintien de l'ensemble photovoltaïque en position sur la structure de support et l'embase et, d'autre part, le déplacement de l'ombrière photovoltaïque au moyen d'un appareil de levage de type chariot élévateur.

Selon un mode de réalisation, la structure de support comporte un ou deux montants, l'embase comporte deux côtés séparés par une partie centrale avant, le véhicule comportant un avant et un arrière, ledit ou chacun desdits montants étant agencé sur l'un desdits côtés de ladite embase de manière à permettre l'insertion de l'avant, ou de l'arrière, dudit véhicule au niveau de ladite partie centrale avant de ladite embase sans contact entre ledit ou lesdits montants et l'avant, respectivement l'arrière, dudit véhicule.

Un avantage est de permettre que le véhicule avance ou recule un maximum à l'intérieur de la zone de stationnement individuel de manière à limiter l'encombrement longitudinal maximal de l'ombrière photovoltaïque. En outre, l'agencement sur les côtés du ou des montants permet de limiter les risques de contact entre la carrosserie du véhicule et lesdits montants.

Selon un mode de réalisation, l'ombrière photovoltaïque comporte un unique montant et au moins un contreventement reliant ledit montant unique et l'une des traverses.

Un avantage est de permettre de limiter l'encombrement lié aux montants sur la zone de stationnement individuel laissant ainsi plus de place au véhicule pour manœuvrer.

Selon un mode de réalisation, l'ombrière photovoltaïque comporte un montant par traverse, la première extrémité longitudinale de chacun desdits montants étant fixée à la traverse associée par l'intermédiaire de la au moins une liaison.

Un avantage est de permettre de répartir les efforts, résultants du poids de l'ensemble photovoltaïque, de part et d'autre dudit ensemble photovoltaïque.

Un autre aspect de l'invention concerne un kit d'ombrière photovoltaïque, ladite ombrière photovoltaïque étant destinée à ombrager une zone de stationnement individuel d'un véhicule comportant un châssis, deux roues avant et deux roues arrière, ledit kit comprenant :
- une embase comprenant au moins une butée apte à bloquer l'avance d'au moins une des deux dites roues avant, ou le recul d'au moins une des deux dites roues arrière, dudit véhicule lorsque ce dernier est en position dans ladite zone de stationnement individuel,
- une structure de support apte à être fixée sur l'embase, ladite structure de support comportant au moins un montant ;
- un ensemble photovoltaïque apte à être relié à une première extrémité longitudinale dudit ou de chacun desdits montants de la structure de support par l'intermédiaire d'au moins une liaison, ledit ensemble photovoltaïque comportant une pluralité de panneaux solaires photovoltaïques, et comportant un support de panneaux supportant ladite pluralité de panneaux solaires photovoltaïques ;
- au moins un élément de fixation de la structure de support sur l'embase ;
- au moins un élément d'assemblage de la liaison entre l'ensemble photovoltaïque et la première extrémité longitudinale dudit ou de chacun desdits montants.

Un tel kit permet encore de faciliter le transport de l'ombrière photovoltaïque. En effet, cette dernière peut être livrée en kit et être ensuite montée sur site.

### Brève description des figures

D'autres caractéristiques et avantages de l'invention ressortiront à la lecture de la description détaillée qui suit, en référence aux figures annexées, qui illustrent :
- Figure1 : est une vue schématique de droite d'un premier exemple de réalisation d'une ombrière photovoltaïque selon l'invention ;
- Figure 2 : est une vue schématique de face du premier exemple de réalisation de l'ombrière photovoltaïque représenté sur la figure 1 ;
- Figure 3 : est une vue schématique de dessus de l'embase du premier exemple de réalisation de l'ombrière photovoltaïque représenté sur la figure 1 ;
- Figure 4 : est une vue schématique de droite du premier exemple de réalisation de l'ombrière photovoltaïque représenté sur la figure 1, ladite ombrière photovoltaïque étant rempliée et déplacée par un chariot élévateur ;
- Figure 5 : est une vue schématique de droite d'un deuxième exemple de réalisation d'une ombrière photovoltaïque selon l'invention ;
- Figure 6 : est une vue schématique de face du deuxième exemple de réalisation de l'ombrière photovoltaïque représenté sur la figure 5 ;
- Figure 7 : est une vue schématique de dessus de l'embase du deuxième exemple de réalisation de l'ombrière photovoltaïque représenté sur la figure 5 ;
- Figure 8 : est une vue schématique de droite du deuxième exemple de réalisation de l'ombrière photovoltaïque représenté sur la figure 5, ladite ombrière photovoltaïque étant rempliée et déplacée par un chariot élévateur.
- Figure 9 : un second mode de réalisation d'une ombrière photovoltaïque de l'invention non pliable ;
- Figure 10 : une vue latérale du second mode de réalisation d'une ombrière photovoltaïque de l'invention non pliable ;
- Figure 11 : une vue de dessus du second mode de réalisation d'une ombrière photovoltaïque de l'invention non pliable sans les panneaux photovoltaïques ;
- Figure 12 : une vue de devant du second mode de réalisation d'une ombrière photovoltaïque de l'invention non pliable
- Figure 13 : un exemple de réalisation d'une fixation d'une chaine de maintien permettant la reprise d'efforts de l'ensemble photovoltaïque au niveau de l'extrémité avant de l'ombrière.
- Figure 14 : une vue de dessus de l'embase de l'ombrière comportant des butées latérales et un guide central.

### Description de l'invention

L'invention concerne une ombrière photovoltaïque 100. On entend par « ombrière » au sens de l'invention, toute structure destinée à fournir de l'ombre. En particulier, l'ombrière photovoltaïque 100 de l'invention est destinée à ombrager une zone de stationnement individuel Z1 d'un véhicule 200. On entend par « zone de stationnement individuel » toute zone destinée au stationnement d'un unique véhicule 200.

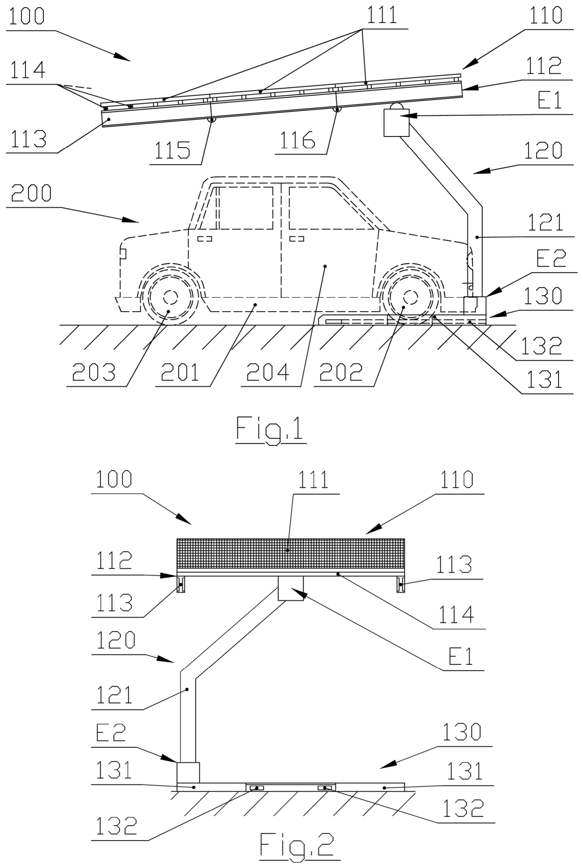

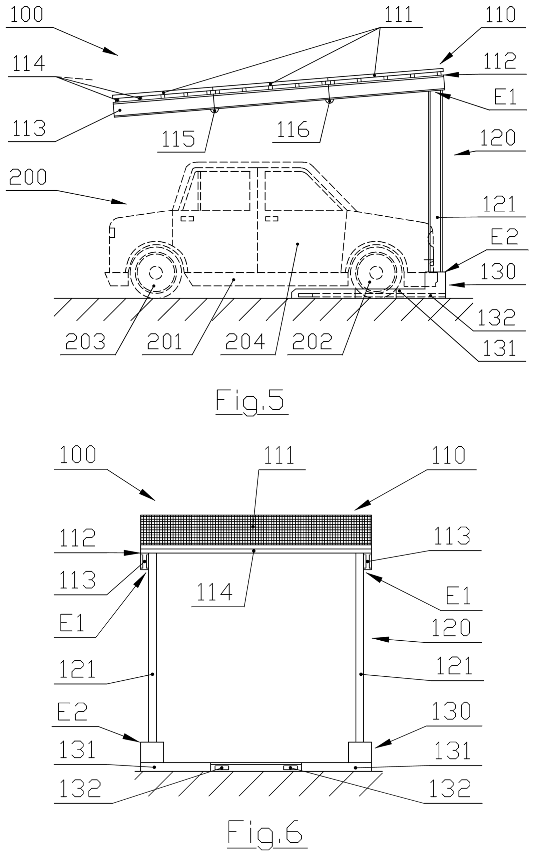

En se rapportant aux figures 1, 3, 5 et 7, le véhicule 200 comporte un châssis 201 et deux roues avant 202. Selon un mode de réalisation, le véhicule 200 comporte, également, deux roues arrière 203. Selon un mode de réalisation, le véhicule 200 comporte, encore, une carrosserie 204. Selon un mode de réalisation, le véhicule 200 est une voiture comme schématisée en traits pointillés aux figures 1 et 5. Selon un mode de réalisation, le véhicule 200 est une camionnette ou tout autre véhicule convenant à l'homme du métier.

Comme schématisé sur les figures 1, 2, 4, 5,6 et 8, l'ombrière photovoltaïque 100 comporte un ensemble photovoltaïque 110.

L'ensemble photovoltaïque 110 comporte une pluralité de panneaux solaires photovoltaïques 111. Chaque panneau solaire photovoltaïque 111 a, par exemple, une longueur comprise entre 1000 mm et 3000 mm et une largeur comprise entre 500 mm et 1500 mm. Chaque panneau solaire photovoltaïque 111 est, par exemple, apte à délivrer une puissance nominale comprise entre 200 Wc et 800 Wc. Chaque panneau solaire photovoltaïque 111 est, par exemple, orienté selon un angle compris entre 0° et 30° par rapport à l'horizontale.

Selon un mode de réalisation représenté sur les figures 1, 2, 4, 5, 6 et 8, l'ensemble photovoltaïque 110 comporte 3 panneaux solaires photovoltaïques 111 ou 3 sous-ensembles de panneaux solaires photovoltaïques 111, chaque sous-ensemble de panneaux solaires photovoltaïques 111 comportant au moins un panneau solaire photovoltaïque 111. Selon un exemple, un sous-ensemble comporte deux panneaux solaire photovoltaïque 111.

Il en est de même du second mode de réalisation de l'ombrière représentée aux figures 9, 10 et 11. Par exemple, dans ce dernier cas il peut y a voir entre 3 à 9 panneaux au sein de l'ensemble photovoltaïque 110. Dans certaines réalisations, il peut y avoir plus de 9 panneaux, dans un autre cas, il peut y avoir deux panneaux. Selon un exemple de configuration d'agencement, l'ensemble photovoltaïque 110 comporte deux colonnes de 3 panneaux. Selon un autre exemple de configuration d'agencement l'ensemble photovoltaïque 110 comporte une colonne de 3 panneaux solaire photovoltaïque 111.

L'ensemble photovoltaïque 110 comporte un support de panneaux 112 supportant la pluralité de panneaux solaires photovoltaïques 111. Selon un mode de réalisation, la pluralité de panneaux solaires photovoltaïques 111 est montée sur le support de panneaux 112 par vissage. Selon des variantes de réalisation, la pluralité de panneaux solaires photovoltaïques 111 est montée sur le support de panneaux 112 par clipsage, par insertion dans un rail, ou par tout autre moyen d'assemblage convenant à l'homme du métier.

Selon un mode de réalisation, le support de panneaux 112 comporte au moins deux traverses 113. Selon un mode de réalisation, les au moins deux traverses 113 sont reliées entre elles par une pluralité de pannes 114. Selon un mode de réalisation, les pannes 114 sont fixées sur les traverses 113 par vissage. Selon un autre mode de réalisation, les pannes 114 sont fixées sur les traverses 113 par soudure. Selon d'autres modes de réalisation, les pannes 114 sont fixées sur les traverses 113 par tout autre moyen de fixation convenant à l'homme du métier. Selon un mode de réalisation, chaque panneau solaire photovoltaïque 111 est monté sur le support de panneaux 112 par vissage dudit panneau solaire photovoltaïque sur au moins l'une des traverses 113 et/ou sur au moins l'une des pannes 114.

Dans le second mode de réalisation représenté aux figures 9 à 12, l'ombrière comprend 6 pannes dont deux distales sont appelées des longerons distaux. 117, 117' formant le cadre du support de panneaux 112 avec les traverses 113.

Les traverses 113 ont, par exemple, une longueur comprise entre 1500 mm et 3000 mm. Selon un mode de réalisation, les traverses 113 présentent un profil en I. Selon d'autres modes de réalisation, les traverses 113 présentent un profil en T, en C, en L, rectangulaire, carré, circulaire, ou toute autre forme de profil convenant à l'homme du métier. Le profil des traverses 113 a, par exemple, une hauteur comprise entre 80 mm et 200 mm, une largeur comprise entre 20 mm et 150 mm, et une épaisseur comprise entre à 5 mm et 20 mm. Les traverses 113 sont, par exemple, espacées deux à deux d'une distance comprise entre 1000 mm et 3000 mm. Selon un mode de réalisation, les traverses 113 sont réalisées en acier. Selon une variante de réalisation, les traverses 113 sont réalisées en aluminium. Selon d'autres modes de réalisation, les traverses 113 sont réalisées en tout autre matériau convenant à l'homme du métier.

Les pannes 114 ont, par exemple, une longueur comprise entre 1500 mm et 3000 mm. Selon un mode de réalisation, les pannes 114 présentent un profil rectangulaire. Selon d'autres modes de réalisation, les pannes 114 présentent un profil en I, en T, en C, en L, rectangulaire, carré, circulaire, ou toute autre forme de profil convenant à l'homme du métier. Le profil des pannes 114 a, par exemple, une hauteur comprise entre 20 mm et 100 mm, une largeur comprise entre 10 mm et 80 mm et une épaisseur comprise entre à 1 mm et 5 mm. Les pannes 114 sont, par exemple, espacées d'une distance comprise entre 100 mm et 1000 mm. Selon un mode de réalisation, les pannes 114 sont réalisées en acier. Selon une variante de réalisation, les pannes 114 sont réalisées en aluminium. Selon d'autres modes de réalisation, les pannes 114 sont réalisées en tout autre matériau convenant à l'homme du métier.

Selon un mode de réalisation représenté sur les figures 1, 4, 5 et 8, le support de panneaux 112 comporte au moins une première articulation 115. Cette dernière permet le pliage d'une première partie du support de panneaux 112 par rapport à une deuxième partie dudit support de panneaux. Selon un mode de réalisation, la première articulation 115 permet à la première partie d'effectuer une rotation par rapport à la deuxième partie selon un axe transversal aux traverses 113 entre un angle de départ, en position dépliée, de 0° et un angle d'arrivée, en position pliée, compris entre 60° et 120°. Selon un mode de réalisation, l'angle d'arrivée est compris entre 80° et 100°. Selon un mode de réalisation, la première articulation 115 comporte un mécanisme de blocage apte à bloquer ou débloquer à volonté le mouvement de la première partie par rapport à la deuxième partie dans une position dépliée. Selon un mode de réalisation, le mécanisme de blocage est, également, apte à bloquer ou débloquer à volonté le mouvement de la première partie par rapport à la deuxième partie dans une position pliée.

Selon un mode de réalisation représenté sur les figures 1, 4, 5 et 8, la première articulation 115 se présente, pour chacune des traverses 113, sous la forme d'une charnière agencée entre un premier tronçon et un deuxième tronçon de ladite traverse de manière à permettre une rotation vers le bas, et d'axe transversal à ladite traverse, dudit premier tronçon par rapport audit deuxième tronçon. Selon un mode de réalisation, la charnière comporte un axe tournant dans un alésage, et le mécanisme de blocage comporte une goupille d'arrêt coopérant avec ledit axe et ledit alésage de manière à permettre le blocage de ladite charnière lorsque le premier tronçon est aligné avec le deuxième tronçon. Selon un mode de réalisation, la goupille d'arrêt coopère, également, avec l'axe et l'alésage de manière à permettre le blocage de la charnière lorsque le premier tronçon est replié par rapport au deuxième tronçon. Ainsi, la première partie du support de panneaux 112 comporte les premiers tronçons de l'ensemble des traverses 113. De même, la deuxième partie du support de panneaux 112 comporte les deuxièmes tronçons de l'ensemble des traverses 113. Selon un mode de réalisation, les premiers tronçons des traverses 113 sont reliés entre eux par au moins deux pannes 114. Selon un mode de réalisation, les deuxièmes tronçons des traverses 113 sont reliés entre eux par au moins deux pannes 114.

Selon un mode de réalisation, le support de panneaux 112 comporte au moins une deuxième articulation 116. Cette dernière permet le pliage de la deuxième partie du support de panneaux 112 par rapport à une troisième partie dudit support de panneaux. Selon un mode de réalisation, la deuxième articulation 116 permet à la deuxième partie d'effectuer une rotation par rapport à la troisième partie selon un axe transversal aux traverses 113 entre un angle de départ, en position dépliée, de 0° et un angle d'arrivée, en position pliée, compris entre 60° et 120°. Selon un mode de réalisation, l'angle d'arrivée est compris entre 80° et 100°. Selon un mode de réalisation, la deuxième articulation 116 comporte un mécanisme de blocage apte à bloquer ou débloquer à volonté le mouvement de la deuxième partie par rapport à la troisième partie dans une position dépliée. Selon un mode de réalisation, le mécanisme de blocage est, également, apte à bloquer ou débloquer à volonté le mouvement de la deuxième partie par rapport à la troisième partie dans une position pliée.

Selon un mode de réalisation représenté sur les figures 1,4, 5 et 8, la deuxième articulation 116 se présente, pour chacune des traverses 113, sous la forme d'une charnière agencée entre le deuxième tronçon et un troisième tronçon de ladite traverse de manière à permettre une rotation vers le bas, et d'axe transversal à ladite traverse, dudit deuxième tronçon par rapport audit troisième tronçon. Selon un mode de réalisation, la charnière comporte un axe tournant dans un alésage, et le mécanisme de blocage comporte une goupille d'arrêt coopérant avec ledit axe et ledit alésage de manière à permettre le blocage de la charnière lorsque le deuxième tronçon est aligné avec le troisième tronçon. Selon un mode de réalisation, la goupille d'arrêt coopère, également, avec l'axe et l'alésage de manière à permettre le blocage de la charnière lorsque le deuxième tronçon est replié par rapport au troisième tronçon. Ainsi, de façon similaire à la première partie et à la deuxième partie du support de panneaux 112, la troisième partie comporte les troisièmes tronçons de l'ensemble des traverses 113. Selon un mode de réalisation, les troisièmes tronçons des traverses 113 sont reliés entre eux par au moins deux pannes 114.

Selon un mode de réalisation schématisé sur les figures 1,2, 4,5,6 et 8, le support de panneaux 112 comporte un ou plusieurs panneaux solaires photovoltaïques 111 montés sur la première partie, un ou plusieurs panneaux solaires photovoltaïques 111 montés sur la deuxième partie et un ou plusieurs panneaux solaires photovoltaïques 111 montés sur la troisième partie. En particulier, selon un mode de réalisation, chaque panneau solaire photovoltaïque 111 est monté sur la partie correspondante du support de panneaux 112 par vissage dudit panneau solaire photovoltaïque 111 sur au moins l'une des traverses 113 et/ou au moins l'une des pannes 114 de ladite partie.

Les exemples de dimensions des pièces, des agencements entre pièces, des profilés et des matériaux décrits pour le premier mode de réalisation de l'ombrière pliable sont également des modes de réalisation qui peuvent se combinés avec le second mode de réalisation dans laquelle l'ombrière n'est pas pliable, telle que celle des figures 9 à 13.

Dans ce cas les traverses 113 ont une longueur comprise entre 3000mm et 5400mm.

### Structure de support

L'ombrière photovoltaïque 100 comporte une structure de support 120. Cette dernière est destinée à supporter l'ensemble photovoltaïque 110.

Dans le cas d'une ombrière non pliable comme celle représentée dans le second mode de réalisation aux figures 9 à 13, les panneaux solaires photovoltaïques 111 sont montées sur le support de panneaux de sorte à ce que leur agencement permette une optimisation de la place disponible. Les dimensions du support de panneaux et le nombre de pannes sont choisies pour adapter la puissance énergétique souhaitée et donc aux dimensions de panneaux choisis.

Selon un mode de réalisation, la structure de support 120 est également apte à supporter un ou plusieurs équipements électriques. Ces derniers sont généralement associés soit au photovoltaïque, soit à la recharge de véhicule électrique. Ces équipements électriques sont, par exemple, un ou plusieurs câblages, et/ou un ou plusieurs onduleurs, et/ou un coffret électrique avec protection, et/ou une ou plusieurs batteries, et/ou une ou plusieurs prises électriques, et/ou une ou plusieurs bornes de recharge de véhicule électrique. Un ou plusieurs équipements électriques peuvent être agencés sur ou dans la structure de support 120 et/ou sur ou dans le support de panneaux 112.

### Montants

La structure de support 120 comporte au moins un montant 121. Chaque montant 121 a, par exemple, une longueur comprise entre 2000 mm et 3500 mm. Selon un mode de réalisation représenté sur les figures 5 à 8, chaque montant 121 est rectiligne. Selon un mode de réalisation représenté sur les figures 1 à Fig.4, chaque montant 121 présente un coude de manière à déporter une première extrémité E1 par rapport à une seconde extrémité longitudinale E2 d'ancrage sur l'embase 130.

Selon un mode de réalisation représenté sur les figures 1 à 4, chaque montant 121 présente un profil circulaire. Selon un mode de réalisation représenté sur les figures 5 à 8, chaque montant 121 présente un profil en I. Selon d'autres modes de réalisation, chaque montant 121 présente un profil en T, en C, en L, rectangulaire, carré, ovale, ou toute autre forme de profil convenant à l'homme du métier. Le profil chaque montant 121 a, par exemple, une hauteur comprise entre 80 mm et 200 mm, une largeur comprise entre 20 mm et 150 mm, et une épaisseur comprise entre à 1 mm et 20 mm.

Selon un mode de réalisation, le ou les montants 121 sont réalisés en acier. Selon une variante de réalisation, le ou les montants 121 sont réalisés en aluminium. Selon d'autres modes de réalisation, le ou les montants 121 sont réalisés en tout autre matériau convenant à l'homme du métier.

Le ou chaque montant 121 est relié à l'ensemble photovoltaïque 110 en une première extrémité longitudinale E1 dudit montant 121 par l'intermédiaire d'au moins une liaison.

Selon un mode de réalisation représenté sur les figures 1 à 4, la structure de support 120 comporte un unique montant 121.

Selon un mode de réalisation, l'unique montant 121 est relié à l'ensemble photovoltaïque 110 en sa première extrémité longitudinale E1 par l'intermédiaire d'une liaison rotule. Selon un mode de réalisation, la liaison rotule permet d'orienter l'ensemble photovoltaïque 110 par rapport à l'unique montant 121, selon deux axes d'un plan horizontal, et dans un débattement inférieur ou égal à 60° autour de chacun de ces deux axes, soit un débattement de ± 30° par rapport à une position intermédiaire. Ainsi, par le réglage de l'orientation de l'ensemble photovoltaïque 110, il est possible d'optimiser la captation des panneaux solaires photovoltaïques 111. La liaison rotule comporte un mécanisme de blocage apte à bloquer ou débloquer à volonté le mouvement de l'ensemble photovoltaïque 110 par rapport à l'unique montant 121. Dans un mode de réalisation, le mécanisme de blocage comporte des mors de serrage apte à enserrer l'élément tournant de la rotule de manière à arrêter son mouvement par friction dans la position souhaitée.

Selon un mode de réalisation, l'unique montant 121 est relié à l'ensemble photovoltaïque 110 en sa première extrémité longitudinale E1 par l'intermédiaire d'une liaison complète. Selon une variante de réalisation, la liaison complète est mise en œuvre par boulonnage de l'ensemble photovoltaïque 110 sur la première extrémité longitudinale E1. Selon d'autres modes de réalisation, la liaison complète est mise en œuvre par vissage, encastrement, soudure, ou tout autre moyen d'assemblage de l'ensemble photovoltaïque 110 sur la première extrémité longitudinale E1 convenant à l'homme du métier.

L'ensemble des modes de réalisation du ou des montants décrits au regard des figures 1 à 8 peuvent également être applicables pour le second mode de réalisation de l'ombrière non pliable décrit au regard des figures 9 à 13.

Selon un mode de réalisation décrit à la figure 9, les montants 121 sont agencés à une distance d1 projetée dans le plan horizontal de 1,5 m de l'extrémité avant du support de panneaux 112. L'extrémité avant du support de panneaux 112 étant la partie supérieure destinée à abriter l'avant du véhicule. Sur la figure 10, cette extrémité avant du support de panneaux 112 comprend un moyen de fixation d'une chaine elle-même fixée à l'embase de sorte à reprendre une partie des efforts du support de panneaux 112.

De préférence, l'ombrière 100 de l'invention comprend différentes configurations correspondant à différents modes de réalisation dans lesquels la distance d1 est comprise entre 0m et 1,5m. Selon un mode préféré, les montants sont agencés au milieu de l'embase 130. L'embase 130 est préférentiellement agencée sous la partie distale du support de panneaux 112, c'est-à-dire sous la première moitié du support de panneaux agencé à l'avant de l'ombrière 100.

Selon un mode de réalisation, les montants 121 sont effilés. Ils peuvent dessiner une structure creuse qui permettra le passage de câbles permettant de récupérer notamment le courant produit par les panneaux photovoltaïques.

Selon un mode de réalisation, l'ombrière comporte un poteau additionnel, par exemple un troisième montant, voire un quatrième montant. Préférentiellement, dans ce cas, le troisième et possiblement le quatrième montant peuvent remplacer les chaines décrites de ce sont mode de réalisation.

Selon un mode de réalisation, l'ombrière photovoltaïque 100 comporte un unique montant 121 et au moins un contreventement reliant ledit unique montant et l'une des traverses 113.

Selon un mode de réalisation, l'unique montant 121 est relié à l'ensemble photovoltaïque 110 en sa première extrémité longitudinale E1 par l'intermédiaire d'une liaison complète et le contreventement est relié à l'ensemble photovoltaïque 110 en une de ses extrémités par l'intermédiaire d'une liaison complète. De même, le contreventement est relié à l'unique montant 121 par l'intermédiaire d'une liaison complète. Selon un mode de réalisation, chaque liaison complète est mise en œuvre par boulonnage. Selon d'autres modes de réalisation, chaque liaison complète est mise en œuvre par vissage, encastrement, soudure ou tout autre moyen d'assemblage convenant à l'homme du métier.

Selon un mode de réalisation, l'unique montant 121 est relié à l'ensemble photovoltaïque 110 en sa première extrémité longitudinale E1 par l'intermédiaire d'une liaison pivot et le contreventement est relié à l'ensemble photovoltaïque 110 en une extrémité par l'intermédiaire d'une liaison pivot. Les liaisons pivots permettent d'orienter l'ensemble photovoltaïque 110 par rapport à l'unique montant 121, selon un axe transversal aux traverses 113, et dans un débattement inférieur ou égal à 60° autour dudit axe, soit un débattement de ± 30° par rapport à une position intermédiaire. Ainsi, par le réglage de l'orientation de l'ensemble photovoltaïque 110, il est possible d'optimiser la captation des panneaux solaires photovoltaïques 111. Au moins une des liaisons pivots comporte un mécanisme de blocage apte à bloquer ou débloquer à volonté le mouvement de l'ensemble photovoltaïque 110 par rapport à l'unique montant 121. Selon un mode de réalisation, la liaison pivot comporte un axe tournant dans un alésage, et le mécanisme de blocage comporte une goupille d'arrêt coopérant avec ledit axe et ledit alésage de manière à permettre le blocage de l'axe dans l'alésage dans la position souhaitée. Le contreventement est relié à l'unique montant 121 par l'intermédiaire d'une liaison complète. Selon un mode de réalisation, la liaison complète est mise en œuvre par boulonnage. Selon d'autres modes de réalisation, la liaison complète est mise en œuvre par vissage, encastrement, soudure ou tout autre moyen d'assemblage convenant à l'homme du métier.

Selon un mode de réalisation, l'ombrière photovoltaïque 100 comporte un montant 121 par traverse 113, la première extrémité longitudinale E1 de chacun desdits montants étant fixée à la traverse associée par l'intermédiaire de la au moins une liaison. En particulier, selon un mode de réalisation représenté sur les figures 5 à 8, la structure de support 120 comporte deux montants 121.

Selon un mode de réalisation, la première extrémité longitudinale E1 de chacun des montants 121 est fixée à la traverse 113 associée par l'intermédiaire d'une liaison pivot du même type que celle précédemment décrite. Selon une variante de réalisation, la première extrémité longitudinale E1 de chacun des montants 121 est fixée à la traverse 113 associée par l'intermédiaire d'une liaison complète du même type que celle précédemment décrite.

### Embase

L'ombrière photovoltaïque 100 comporte une embase 130. Cette dernière est fixée à la structure de support 120 par l'intermédiaire d'au moins une fixation. Selon un mode de réalisation, l'embase 130 est réalisée en béton. Selon un mode de réalisation, l'embase est réalisée en béton armé ou fibré. Selon d'autres modes de réalisation, l'embase est réalisée en acier, en fonte ou en tour autre matériau convenant à l'homme du métier. L'embase a, par exemple, une longueur comprise entre 1200 mm et 1900 mm et une largeur comprise entre 2000 mm et 2400 mm. L'embase a, par exemple, une masse comprise entre 200 kg et 3000 kg. L'embase agit, ainsi, comme un leste permettant le maintien en position de la structure de support 120 surmonté de l'ensemble photovoltaïque (110).

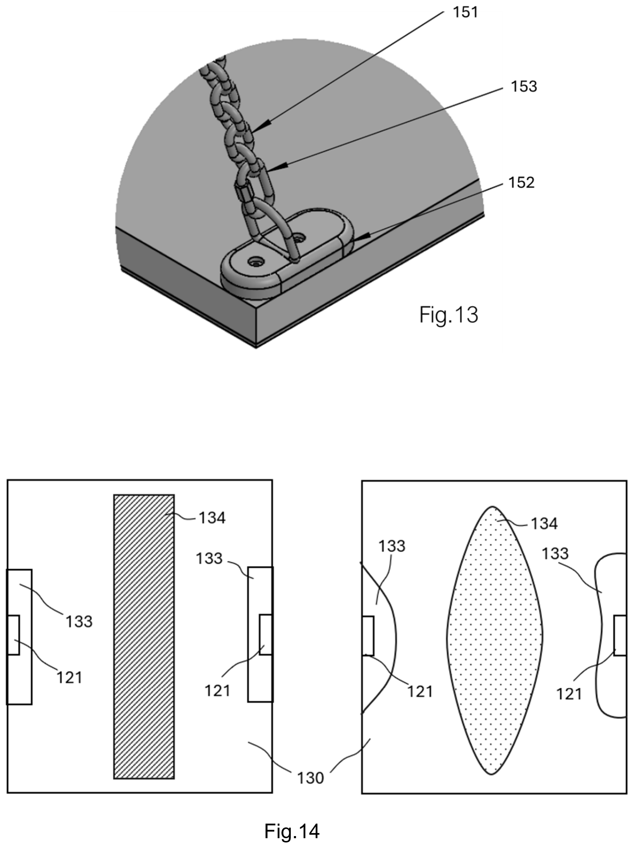

Selon un exemple, l'embase 130 comporte une surface polygonale telle que celle représentée à la figure 9, par exemple rectangulaire. Selon cet exemple, l'embase 130 ne comporte pas de butée, ni à l'extrémité longitudinale pour empêcher le roulage, ni latérale pour protéger les montants formant les poteaux 121. La figure 14 représente des exemples de butées latérales formées sur la surface de l'embase 130 pour protéger les montants 121.

Dans cet exemple, l'embase 130 a une longueur de 2 m et une largeur de 2,40 m. Dans cet exemple, les montants sont agencés au milieu de la longueur de l'embase 130.

La figure 10 permet de représenter un mode de réalisation de l'ombrière 130 dans laquelle est représentée un montant 121 fixé à une traverse 113 au niveau de son extrémité supérieure et fixé à l'embase 130 au niveau de son extrémité inférieure.

Cette représentation permet de visualiser le centre de gravité G1 projeté ici dans le plan transversal de l'ombrière. Le centre de gravité G1 est sur un axe passant sensiblement par le milieu de l'embase 130. Ce qui permet d'équilibrer l'ombrière.

Selon un mode de réalisation, dans le plan représenté à la figure 10, le centre de gravité G1 est compris dans une forme sensiblement polygonale dont la base est l'embase et dont un des côtés opposés est parallèle au plan du support de panneaux 112.

Selon un exemple, des chaines de maintien 151 peuvent être agencées entre l'extrémité avant de l'embase 130 et l'extrémité distale du support de panneaux 112.

La figure 9 représente deux chaines 151 disposées aux extrémités distales de l'embase 130, c'est-à-dire aux encoignures de l'embase 130.

La figure 13 représente un exemple de réalisation d'une fixation de la chaine 151 sur l'embase. Une telle fixation comprend par exemple la mise en place d'une maille rapide 153 pour l'installation de la chaine et une platine formant un système d'accroche 152 de la chaine au sol.

La chaine permet de reprendre une partie des efforts.

D'autres alternatives aux chaines 151 sont possibles, telles qu'un câble métallique avec ou sans gaine. Une autre alternative est la mise en place de cordes de maintien ou de poutre métallique.

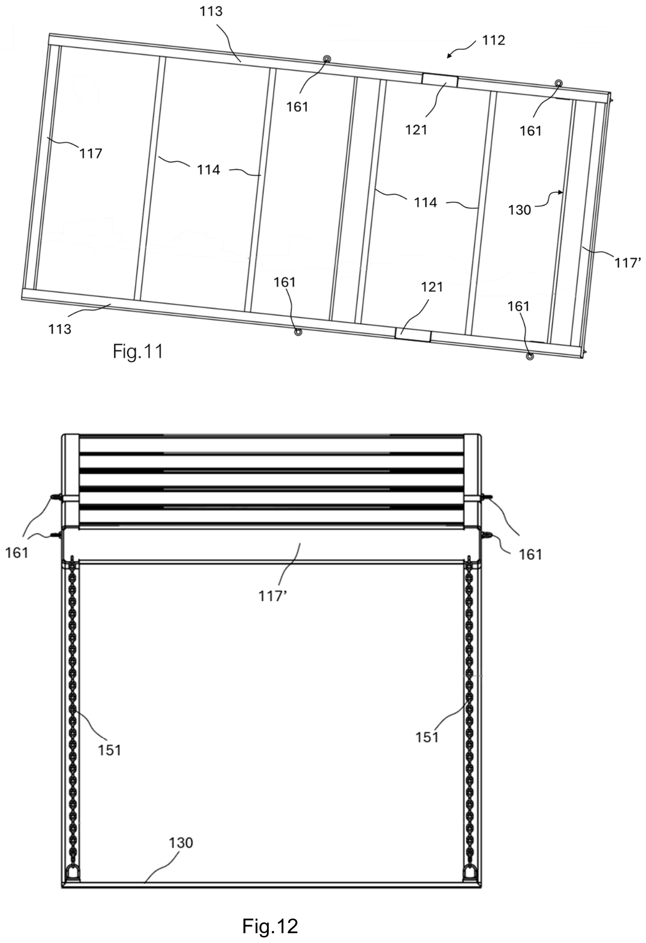

La figure 12 représente une vue de face de l'ombrière 100 comportant des chaines 151 agencées de part et d'autre de chaque côté latéral de la dite ombrière. La vue de face correspond à l'extrémité de l'ombrière 100 recevant l'avant du véhicule. Un longeron distal 117' étant situé au premier plan et formant un des côtés du support de panneau 112.

Selon un mode de réalisation, chaque montant 121 de la structure de support 120 comprend une platine de fixation sur sa seconde extrémité longitudinale E2. La platine de fixation comporte des orifices permettant le passage de vis de fixation. L'embase 130 comporte alors des trous taraudés, chacun destiné à recevoir une partie filetée d'une des vis de fixation. La structure de support 120 est agencée sur l'embase 130 de manière à ce que les orifices de la platine de fixation soient disposés chacun en vis-à-vis d'un trou taraudé de l'embase. Une vis de fixation est alors insérée dans chacun des orifices et visée dans le trou taraudé correspondant de manière à rendre solidaires la structure de support 120 et l'embase 130.

Selon un mode de réalisation, chaque montant 121 de la structure de support 120 comprend une seconde extrémité longitudinale E2 encastrée dans l'embase.

Selon un mode de réalisation, l'embase 130 comporte deux côtés C1, C2 séparés par une partie centrale avant A1. Chaque montant 121 de la structure de support 120 est agencé sur l'un des côtés C1, C2 de l'embase 130, de manière à permettre l'insertion de l'avant, ou de l'arrière, du véhicule 200 au niveau de la partie centrale avant A1 de ladite embase sans risquer d'interaction entre ledit ou lesdits montants et l'avant, respectivement l'arrière, dudit véhicule. Dans un exemple de réalisation, la structure support 120 comporte soit un, soit deux montants 121.

### Butée

L'embase 130 comprend au moins une butée 131, 133. Selon un mode de réalisation la butée est apte à bloquer l'avance d'au moins une des deux dites roues avant 202, ou le recul d'au moins une des deux dites roues arrière 203, du véhicule 200 lorsque ce dernier est en position dans la zone de stationnement individuel Z1.

La butée 131 présente, par exemple, une épaisseur comprise entre 60 mm et 130 mm. Ainsi, la butée 131 est suffisamment haute pour permettre le blocage de l'avance d'une roue avant 202, ou du recul d'une roue arrière 203, et suffisamment basse pour passer sous le châssis 201 du véhicule 200 et ainsi éviter d'endommager ledit châssis.

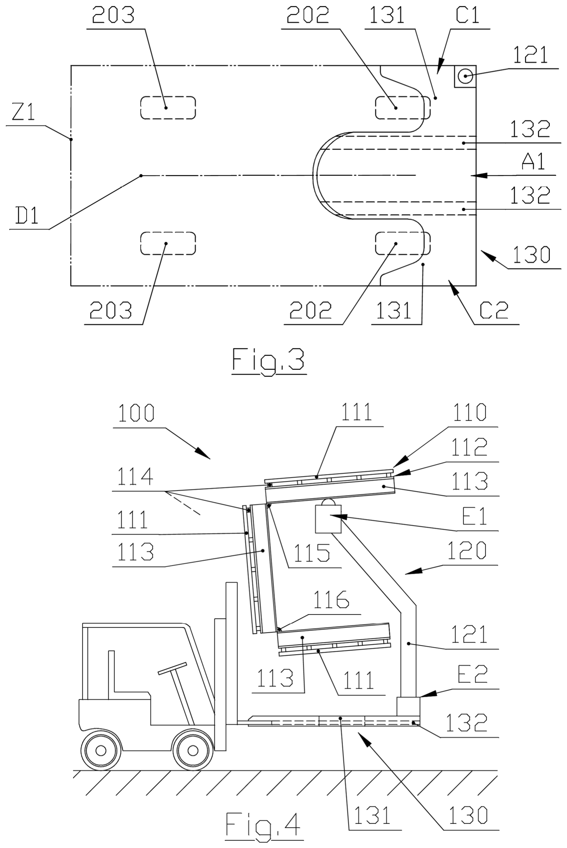

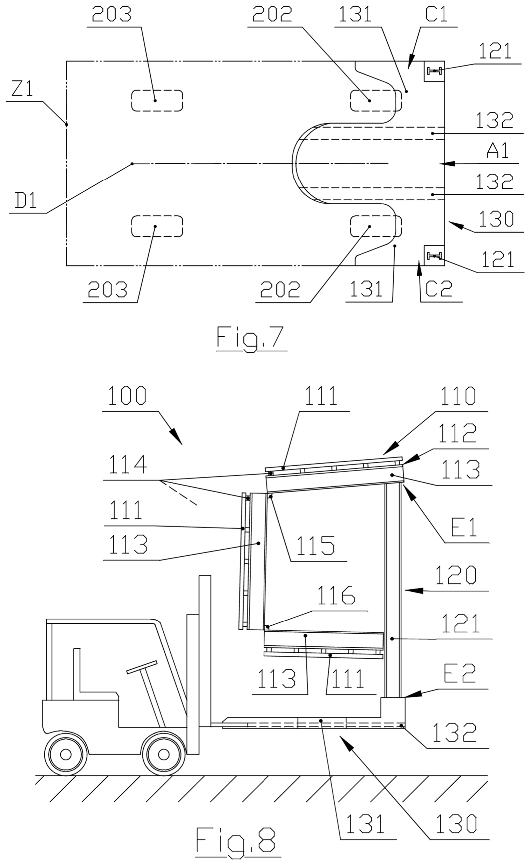

Selon un mode de réalisation représenté sur les figures 3 et 7, la butée 131 présente une arrête supérieure destinée à entrer en contact avec une roue avant 202, ou une roue arrière 203, du véhicule 200 lorsque ce dernier est en position dans la zone de stationnement individuel Z1 et effectue des manœuvres. En contact avec la roue avant 202, respectivement la roue arrière 203, du véhicule 200, l'arrête supérieure exerce sur ladite roue avant, respectivement arrière, un effort s'opposant au mouvement de ladite roue avant dans le sens de l'avance dudit véhicule, respectivement de ladite roue arrière dans le sens du recul dudit véhicule. L'arrête supérieure est située à une distance suffisante des montants 121 de sorte qu'une fois la roue avant 202, ou respectivement la roue arrière 203, en contact avec l'arrête supérieure, et quelle que soit l'orientation du véhicule 200 en position dans la zone de stationnement individuel Z1, l'avant dudit véhicule, ou respectivement l'arrière dudit véhicule, est maintenu à une distance permettant d'éviter toute interaction de l'avant dudit véhicule, ou respectivement l'arrière dudit véhicule, avec lesdits montants.

Selon un mode de réalisation représenté sur les figures 3 et 7, la butée 131 présente une partie frontale destinée à arrêter l'avance d'une roue avant 202, ou le recul d'une roue arrière 203, du véhicule 200 lorsque ce dernier est orienté longitudinalement à la zone de stationnement individuel Z1 selon un axe longitudinal médian D1 de ladite zone de stationnement individuel. La butée 131 présente, également une partie latérale en saillie par rapport à la partie frontale, ladite partie latérale étant évasée vers l'extérieur de la zone de stationnement individuel Z1. La partie latérale est destinée à arrêter l'avance d'une roue avant 202, ou le recul d'une roue arrière, du véhicule 200 lorsque ce dernier est orienté dans une direction oblique par rapport à l'axe longitudinal médian D1. La partie frontale de la butée 131 a, par exemple, une largeur comprise entre 250 mm et 350 mm. La partie latérale de la butée 131 a, par exemple, une largeur comprise entre 100 mm et 250 mm et une longueur de saillie par rapport à la partie frontale comprise entre 200 mm et 400 mm.

Selon un mode de réalisation représenté sur les figures 3 et 7, l'embase 130 comprend une butée 131 de chaque côté C1, C2 de ladite embase. Chaque butée 131 est apte à bloquer l'avance d'une des deux roues avant 202, ou le recul d'une des deux roues arrière 203, du véhicule 200. Les deux butées 131 sont du type de celle précédemment décrite et ont des formes symétriques par rapport à l'axe longitudinal médian D1.

Selon un mode de réalisation, l'ombrière 100 comprend des butées latérales 133 telles que représentées à la figure 14 (figure de gauche ou figure de droite). Les butées latérales 133 permettent de protéger les montants 121. Selon différentes variantes, les butées latérales 133 ont des profils polygonaux tels que ceux représentés sur la figure de gauche. Dans cet exemple, le profil de la butée latérale 133 est rectangulaire. Selon d'autres variantes, les profils des butées peuvent être courbes tels que les deux exemples asymétriques représentés sur la figure de droite.

Les butées forment préférentiellement un leste de l'ombrière 100.

Selon un mode de réalisation, l'embase 130 comporte un élément central de guidage 131. Ce dernier est apte à s'insérer entre les deux roues avant 202, ou les deux roues arrière 203, sous le châssis du véhicule 200 lorsque ledit véhicule avance, ou respectivement recule, dans la zone de stationnement individuel Z1.

L'élément central de guidage 131 présente, par exemple, une épaisseur comprise entre 60 mm et 130 mm. Ainsi, l'élément central de guidage 131 est suffisamment haut pour empêcher que les roues avant 202, ou les roues arrière 203, du véhicule 200 ne roulent sur la surface de la zone de stationnement individuel Z1 délimitée par ledit élément central de guidage 131, et ainsi obliger les roues avant 202, respectivement les roues arrière 203, du véhicule 200 à passer sur les côtés dudit élément central de guidage 131. Également, l'élément central de guidage 131 est suffisamment bas pour passer sous le châssis 201 du véhicule 200 et ainsi éviter d'endommager ledit châssis.

Selon un mode de réalisation représenté sur les figures 3 et 7, l'élément central de guidage 131 s'étend longitudinalement sur la zone de stationnement individuel Z1. L'élément central de guidage 131 s'étend, par exemple, en saillie par rapport à la partie frontale de la butée 131 sur une longueur comprise entre 500 mm et 2500 mm. L'élément central de guidage 131 a, par exemple, une largeur comprise entre 800 mm et 1200 mm. Selon un mode de réalisation représenté sur les figures 3 et 7, la largeur de l'élément central de guidage 131 diminue progressivement sur au moins une partie dudit élément central de guidage dans le sens de l'éloignement de la partie frontale de la butée 131. En particulier, dans un exemple de réalisation l'élément central comporte une extrémité arrondie.

Selon un mode de réalisation, l'ombrière comprend un guide central qui n'est pas intégré à une butée ou qui est indépendant d'une butée. La figure 14 représente différentes modes de réalisation d'un guide central 134 comportant différents profils. La figure de gauche montre un guide de forme rectangulaire s'étendant longitudinalement. D'autres formes polygonales de guides centrales peuvent être mises en œuvre selon différentes variantes de réalisation.

Selon un autre exemple le guide central 134 a une forme oblongue telle que représentée sur la figure de droite.

Dans chaque mode de réalisation, le guide a préférentiellement une large plus petite que la largeur des roues d'un véhicule. Dans chaque mode de réalisation, le guide central a une hauteur limitée de sorte que le bas de caisse d'un véhicule ne touche par le guide. A cet effet, le guide central a une hauteur limitée à quelques centimètres, préférentiellement inférieure à 13 cm afin de ne pas rentrer en contact avec le châssis ou le bas de caisse du véhicule.

Selon un mode de réalisation, la ou les butées 131, et/ou l'élément central de guidage 131 présente au moins une partie de couleur différente de celle du sol de la zone de stationnement individuel Z1 de manière à permettre un guidage visuel lors des manœuvres de stationnement du véhicule. La partie colorée est obtenue par peinture, par teinture dans la masse, ou par tout autre moyen de coloration convenant à l'homme du métier.

Selon un mode de réalisation représenté sur les figures 1 à8, l'embase 130 comporte au moins un canal 132 adapté pour recevoir un bras de levage d'un engin de levage.

Selon un mode de réalisation schématisé sur les figures 1 à 8, l'embase 130 comporte deux canaux 132.

Selon un mode de réalisation, chaque canal 132 est traversant. Alternativement, chaque canal 132 est aménagé sur uniquement une partie de l'embase 130 et est non traversant. Selon un mode de réalisation représenté sur les figures 1 a 8, le ou les canaux 132 sont aménagés le long de l'élément central de guidage 131.

Selon un mode de réalisation schématisé sur les figures 1 à 8, chaque canal 132 se présente sous la forme d'un logement aménagé à l'intérieur de l'embase 130. Lorsque, l'embase 130 est réalisée en béton armé ou fibré, le logement est par exemple aménagé dans un fourreau métallique enserré dans le béton de ladite embase.

Alternativement, chaque canal 132 se présente sous la forme d'une rainure aménagée sous l'embase 130.

Chaque canal 132 a, par exemple, une hauteur comprise entre 10 mm et 90 mm, une largeur comprise entre 100 mm et 200 mm, et une longueur comprise entre 600 mm et 1200 mm. Lorsque l'embase comporte plusieurs canaux 132, les canaux 132 sont, par exemple, deux à deux écartés d'une distance comprise entre 200 mm et 600 mm.

Un autre aspect de l'invention concerne un kit d'ombrière photovoltaïque selon l'invention. Le kit comprend une embase 130 telle que décrite précédemment. Le kit comprend également une structure de support 120 telle que décrite précédemment. La structure de support 120 est apte à être fixée sur l'embase 130. Le kit comprend un ensemble photovoltaïque 110 tel que précédemment décrit. L'ensemble photovoltaïque 110 est apte à être relié à une première extrémité longitudinale E1 du ou de chaque montant 121 de la structure de support 120 par l'intermédiaire d'au moins une liaison. Le kit comprend, également, au moins un élément de fixation de la structure de support 120 sur l'embase 130. Selon un mode de réalisation décrit précédemment, le au moins un élément de fixation comprend des vis de fixation. Le kit comprend au moins un élément d'assemblage de la liaison entre l'ensemble photovoltaïque 110 et la première extrémité longitudinale E1 du ou de chaque montant 121. Selon un mode de réalisation décrit précédemment, le au moins un élément d'assemblage comprend des vis et/ou des boulons. L'ombrière photovoltaïque 100 ainsi en kit est plus facilement transportable. En effet, chaque élément est déplaçable individuellement avant montage et est donc plus facilement manipulable que l'ombrière photovoltaïque 100 assemblée.

## Revendications

1. Ombrière photovoltaïque (100) destinée à ombrager une zone de stationnement individuel (Z1) d'un véhicule comportant un châssis, deux roues avant et deux roues arrière, ladite ombrière (100) comportant :
• un ensemble photovoltaïque (110) comportant une pluralité de panneaux solaires photovoltaïques (111), et comportant un support de panneaux (112) supportant ladite pluralité de panneaux solaires photovoltaïques (111) ;
• une structure de support (120) comportant au moins un montant (121) relié à l'ensemble photovoltaïque (110) en une première extrémité longitudinale (E₁) dudit ou de chacun desdits montants (121) par l'intermédiaire d'au moins une liaison,
• une embase (130) fixée à la structure de support (120) par l'intermédiaire d'au moins une fixation, ladite embase (130) formant une zone de roulage dudit véhicule et formant un leste de ladite ombrière photovoltaïque (100).

2. Ombrière photovoltaïque (100) selon la revendication 1, **caractérisée en ce que** la structure de de support (120) comporte deux montants (121) agencés de part et d'autre des deux côtés latéraux de l'embase (130) délimitant la largeur de la zone de stationnement (Z1), lesdits montants (121) étant positionnés et fixés entre le milieu de chaque côté de l'embase et l'extrémité distale avant de chaque côté de l'embase (130).

3. Ombrière photovoltaïque (100) selon la revendication 1, **caractérisée en ce que** le support de panneaux (112) comporte un cadre comportant deux longerons (117, 117') et deux traverses (113) sensiblement perpendiculaires entre eux, le longeron distal (117') formant l'extrémité longitudinal de l'ombrière (100), la distance entre le longeron distal (117') et la position du poteau dans le plan du cadre étant comprise entre 0,1 m et 1,8 m.

4. Ombrière photovoltaïque (100) selon la revendication 1, **caractérisée en ce que** le longeron distal (117') du support de panneaux (112) comporte une fixation d'un élément de maintien (151) à l'embase (130), ledit élément de maintien étant un couple de chaines, un couple de câbles, un couple de tubes ou un couple de poteaux (151), chaque élément de maintien étant fixé d'une part à l'embase (130) et d'autre part au support de panneaux (112).

5. Ombrière photovoltaïque (100) selon la revendication 1, **caractérisée en ce que** le support de panneaux (112) comprend une pluralité de pannes (114) destinée à relier les traverses entre elles et fixer les panneaux photovoltaïques.

6. Ombrière photovoltaïque (100) selon la revendication 1, **caractérisée en ce que** les traverses (113) comprennent chacune deux anneaux de levage (161).

7. Ombrière photovoltaïque (100) selon la revendication 1, **caractérisée en ce que** l'embase (130) comprend au moins deux butées latérales (133) permettant de protéger les montants et de former un leste de l'ombrière (100).

8. Ombrière photovoltaïque (100) selon la revendication 1, **caractérisée en ce que** l'embase (130) comprend au moins un guide central (134) apte à s'insérer entre les deux roues avant, ou les deux roues arrière, sous le châssis du véhicule lorsque ledit véhicule avance dans la zone de stationnement individuel (Z1).

9. Ombrière photovoltaïque (100) selon la revendication 1, **caractérisée en ce qu'**elle est traversante.

10. Ombrière photovoltaïque (100) selon la revendication 1, **caractérisée en ce que** l'embase (130) comprend au moins une butée apte à bloquer l'avance d'au moins une des deux dites roues avant, ou le recul d'au moins une des deux dites roues arrière, dudit véhicule lorsque ce dernier est en position dans ladite zone de stationnement individuel (Z₁).

11. Ombrière photovoltaïque (100) selon les revendications 1 et 10, **caractérisée en ce que** le support de panneaux (112) comporte une pluralité de panneaux solaires photovoltaïques (111).

12. Ombrière photovoltaïque (100) selon la revendication 1, **caractérisée en ce qu'**elle comporte un unique montant (121) et au moins un contreventement reliant ledit montant unique et l'une des traverses.

13. Ombrière photovoltaïque (100) selon l'une des revendications 1 à 11, **caractérisée en ce qu'**elle comporte un montant (121) par traverse, la première extrémité longitudinale (E₁) de chacun desdits montants étant fixée à la traverse associée par l'intermédiaire de la au moins une liaison.

14. Kit d'ombrière photovoltaïque (100), ladite ombrière photovoltaïque (100) étant destinée à ombrager une zone de stationnement individuel (Z₁) d'un véhicule comportant un châssis, deux roues avant et deux roues arrière, ledit kit comprenant :
• une embase (130) formant au moins un lest,
• une structure de support (120) apte à être fixée sur l'embase (130), ladite structure de support (120) comportant au moins un montant (121) ;
• un ensemble photovoltaïque (110) apte à être relié à une première extrémité longitudinale (E₁) dudit ou de chacun desdits montants (121) de la structure de support (120) par l'intermédiaire d'au moins une liaison, ledit ensemble photovoltaïque (110) comportant une pluralité de panneaux solaires photovoltaïques (111), et comportant un support de panneaux (112) supportant ladite pluralité de panneaux solaires photovoltaïques (111) ;
• au moins un élément de fixation de la structure de support (120) sur l'embase,
• au moins un élément d'assemblage de la liaison entre l'ensemble photovoltaïque (110) et la première extrémité longitudinale (E₁) dudit ou de chacun desdits montants (121).
